# EUROPÄISCHE PATENTSCHRIFT

(11) **EP 3 182 607 B1**
(45) Veröffentlichungstag und Bekanntmachung des Hinweises auf die Patenterteilung: **20.02.2019**
(21) Anmeldenummer: 16204514.0
(22) Anmeldetag: 15.12.2016
(51) Int. Cl.: H04B 3/54

(54) **LÜFTER MIT STATUSSIGNALGENERIERUNG UND ÜBERMITTLUNG DES STATUSSIGNALS ÜBER EINE VERSORGUNGSLEITUNG**
VENTILATOR WITH STATUS SIGNAL GENERATION AND STATUS SIGNAL TRANSFER THROUGH A SUPPLY LINE
VENTILATEURS POUVANT PRODUIRE DES SIGNAUX D'ÉTAT ET LES TRANSMETTRE PAR L'INTERMÉDIAIRE D'UNE LIGNE D'ALIMENTATION

(30) Priorität: 16.12.2015 DE 202015106847 U
(43) Veröffentlichungstag der Anmeldung: 21.06.2017
(73) Patentinhaber: Elektrosil Systeme der Elektronik GmbH, 22761 Hamburg (DE)
(72) Erfinder: Niemann, Hendrik, 21224 Rosengarten (DE); Oppermann, Martin, 21635 Jork (DE)
(74) Vertreter: RGTH

(56) Entgegenhaltungen:
- US-A- 5 189 412
- US-A1- 2013 046 872
- US-A1- 2014 055 250

## Beschreibung

### Technisches Gebiet

Die Erfindung betrifft einen Lüfter mit einem Lüfterrad und einem Motor zum Antrieb des Lüfterrads, wobei der Lüfter zwei Versorgungsanschlüsse zur Stromversorgung des Motors und einen Steuereingang zur Ansteuerung des Motors mittels eines Steuersignals aufweist. Der Lüfter weist ferner eine Statussignalschaltung zur Erzeugung eines Statussignals des Lüfters auf.

### Stand der Technik

In der US 4,977,733 A wird eine Überwachungsschaltung für einen Gerätelüfter beschrieben. Die Spannung an einem Kollektormotor, welcher diesen Lüfter antreibt, wird gefiltert und dann in einem Komparator mit einem Signal verglichen, das einer Referenzdrehzahl entspricht. Ist die Lüfterdrehzahl zu niedrig, wird einem Mikroprozessor ein Signal zugeführt, wobei dieser über einen seiner Ausgänge den Lüfter abschaltet.

Aus der DE 10 009 128 C1 ist eine Einrichtung zur Belüftung eines Fahrzeugsitzes bekannt, wobei ein Lüfter in Verbindung mit einer zugeordneten Steuerelektronik über einen bidirektionalen Datenbus mit einer zentralen Sitzsteuerung verbunden ist. Die Steuerelektronik kann Temperaturdaten und weitere Betriebszustandsdaten zu der zentralen Sitzsteuerung übertragen. Die zentrale Sitzsteuerung kann Steuersignale zur Steuerelektronik übertragen. Die zentrale Sitzsteuerung kann eine Fehlerdiagnose für den Lüfter vornehmen.

In der EP 1314 894 B2 wird ein Gerätelüfter mit einem Antriebsmotor beschrieben, wobei zusätzlich zu den zwei Stromversorgungsanschlüssen eine Steuerleitung vorgesehen ist, über die dem Antriebsmotor ein Signal in Form eines PWM-Signals zugeführt wird. Damit kann die Drehzahl des Gerätelüfters von außen vorgegeben werden. Die Steuerleitung ist als bidirektionale Leitung ausgebildet. Somit kann gemäß der EP 1314 894 B2 ein im Lüfter generiertes Fehlersignal über die Steuerleitung nach außen übermittelt werden.

US 5,189,412 A beschreibt eine Fernbedienung mit einer doppelten Mikroprozessorsteuerung für den Betrieb einer Kombination aus Deckenventilator und Leuchte.

### Darstellung der Erfindung: Aufgabe, Lösung, Vorteile

Aufgabe der vorliegenden Erfindung ist es, einen Lüfter mit einem Lüfterrad und einem Motor zum Antrieb des Lüfterrads für eine Belüftungsvorrichtung derart weiter zu verbessern, dass in möglichst einfacher Weise nicht nur ein Fehlersignal, sondern auch weitere Statusinformationen vom Lüfter an ein Steuergerät übermittelt werden können.

Erfindungsgemäß ist hierfür ein Lüfter mit einem Lüfterrad und einem Motor zum Antrieb des Lüfters vorgesehen, wobei der Lüfter zwei Versorgungsanschlüsse zur Stromversorgung des Motors sowie einen Steuereingang zur Ansteuerung des Motors mittels eines Steuersignals aufweist. Des Weiteren weist der Lüfter erfindungsgemäß eine Statussignalschaltung zur Erzeugung eines Statussignals des Lüfters auf. Die Statussignalschaltung ist erfindungsgemäß zur Modulation des Statussignals auf ein an einem der beiden Versorgungsanschlüsse anliegendes Versorgungsspannungssignal ausgebildet.

Der Lüfter kann als Radiallüfter oder Axiallüfter ausgebildet sein. Ferner kann der Motor des Lüfters als Außenläufermotor oder Innenläufermotor ausgebildet sein. Bevorzugterweise ist der Motor des Lüfters als kollektorloser Motor ausgebildet. Der erfindungsgemäße Lüfter ist für eine Belüftungsvorrichtung, bevorzugterweise für eine Sitzbelüftungsvorrichtung eines Fahrzeugsitzes, ausgebildet.

Unter den Versorgungsanschlüssen sind Anschlussmittel zum Anschluss von Versorgungsleitungen oder Versorgungsleitungen selbst zu verstehen. Über die beiden Versorgungsanschlüsse wird die elektrische Versorgungsspannung von außen an den Motor des Lüfters angelegt und der Motor somit mit Strom versorgt.

Der Steuereingang kann als Anschlussmittel zum Anschluss einer Steuerleitung oder als Steuerleitung selbst ausgebildet sein. Der Steuereingang ist mit einem Steuergerät verbindbar, sodass ein von außen, insbesondere vom Steuergerät, erzeugtes Steuersignal empfangen werden kann. Über das Steuersignal kann der Motor des Lüfters beispielsweise eingeschaltet, ausgeschaltet und/oder die Drehzahl des Motors vorgegeben werden.

Der Steuereingang ist ausschließlich als Signaleingang und nicht zusätzlich als Signalausgang ausgebildet. Somit ist der Steuereingang als unidirektionales Anschlussmittel ausgebildet. Statussignale, beispielsweise Fehlersignale, können somit nicht über die Steuerleitung an ein externes Steuergerät übermittelt werden.

Das Statussignal beinhaltet eine oder mehrere Informationen über den Lüfterzustand. Bevorzugterweise ist die Statussignalschaltung zur Erzeugung mehrerer unterschiedlicher Statussignale des Lüfters ausgebildet. Beispielsweise kann über das Statussignal eine Information bezüglich eines Fehlerfalls, eines Neustarts, der Hochlaufphase des Motors, der Ist-Drehzahl des Motors sowie auch des Temperatureinflusses nach außen, beispielsweise an ein Steuergerät, übermittelt werden.

Erfindungsgemäß wird das Statussignal mittels der Statussignalschaltung im Lüfter erzeugt und auf eine Stromversorgungsleitung bzw. auf ein Versorgungssignal, welches am ersten Versorgungsanschluss anliegt, auf-moduliert. Wird die Stromversorgung des Lüfters bzw. des Motors des Lüfters vom externen Steuergerät generiert und über eine Versorgungsleitung an die Versorgungsanschlüsse des Lüfters angelegt, kann über dieselbe Versorgungsleitung das auf das Versorgungssignal aufmodulierte Statussignal vom externen Steuergerät empfangen, erkannt und ausgewertet werden. Hierfür weist das Steuergerät vorzugsweise eine Auswerteschaltung zur Erkennung und Auswertung des über die Versorgungsleitung empfangenen Statussignals des Lüfters auf. Zumindest der erste Versorgungsanschluss des Lüfters ist somit nicht nur als reiner Spannungs- bzw. Stromversorgungsanschluss, sondern auch als Signalausgang ausgebildet. Über des ersten Versorgungsanschluss kann somit die elektrische Spannungsversorgung für den Lüfter bereit gestellt werden, aber auch das Statussignal vom Lüfter an außen, beispielsweise an das Steuergerät, übertragen werden.

Da die Übermittlung an das Steuergerät über die Versorgungsleitung vorgesehen ist, kann auf eine zusätzliche Statussignalleitung verzichtet werden. Auch muss im Gegensatz zu aus dem Stand der Technik bekannten Vorrichtungen die Steuersignalleitung nicht notwendigerweise bidirektional ausgebildet sein. Des Weiteren können somit in einfacher Weise unterschiedliche Statusinformationen und nicht nur ein Fehlerfall des Lüfters bzw. des Motors erzeugt, übermittelt und im Steuergerät ausgewertet werden. Der Spannungspegel der Versorgungsspannung am Stromversorgungsanschluss des Lüfters ist im Vergleich zum Signalpegel auf der Steuerleitung relativ stabil. Deshalb ist die Übertragung bzw. Auf-Modulation unterschiedlicher Statussignale auf das Versorgungssignal am Stromversorgungsanschluss technisch einfacher, kostengünstiger und weniger fehleranfällig.

Bevorzugterweise können an einem Spannungsversorgungsausgang des Steuergeräts mehrere Lüfter, beispielsweise ein Lüfter-Array, angeschlossen sein. Das Steuergerät kann dann mittels einer einzigen Auswerteschaltung, welche elektrisch mit dem Spannungsversorgungsausgang des Steuergeräts verbunden ist, Statussignale von den verschiedenen Lüftern empfangen, erkennen und auswerten. Somit ist auch bei dem Betrieb von mehreren Lüftern über ein einziges Steuergerät keine zusätzliche Leitung zur Übermittlung von Statussignalen notwendig.

Bevorzugterweise ist die Statussignalschaltung zur Generierung von Stromimpulsen für das Statussignal ausgebildet. Das Statussignal kann somit in Form von Stromimpulsen auf das am ersten Versorgungsanschluss anliegende Versorgungssignal auf-moduliert werden. Das Statussignal weist somit bevorzugterweise Stromimpulse auf oder besteht daraus. Die Stromimpulse können dabei jede für die Erkennung durch die Auswerteschaltung des Steuergeräts geeignete Pulsform aufweisen. Beispielsweise können die Stromimpulse sinusförmig, dreieckförmig, trapezförmig oder rechteckförmig ausgebildet sein. Besonders bevorzugterweise weist das Statussignal Stromimpulse in Form von beabstandet zueinander angeordneten Rechteckimpulsen auf.

Des Weiteren ist bevorzugterweise vorgesehen, dass die Statussignalschaltung zur Generierung von Stromimpulsen für das Statussignal mit unterschiedlicher und vom Statusfall abhängiger Frequenz ausgebildet ist. Somit ist bevorzugterweise vorgesehen, dass die von der Statussignalschaltung generierten Stromimpulse für das Statussignal je nach Statusfall bzw. Statusinformation einen unterschiedlichen Abstand zueinander aufweisen können. Beispielsweise könnte jeder Statusinformation eine individuelle Frequenz zugeordnet sein. Im Steuergerät kann durch zeitliche Auswertung der Stromimpulse die Statusinformation ausgelesen bzw. ermittelt werden.

Die Statussignalschaltung ist bevorzugterweise zur Amplituden-Modulation des Statussignals auf ein Versorgungssignal an einem der zwei Versorgungsanschlüsse ausgebildet.

Auch ist bevorzugterweise vorgesehen, dass die Statussignalschaltung zur Generierung der Stromimpulse mit einer Amplitude ausgebildet ist, wobei die Amplitude größer, vorzugsweise um mindestens 25 % größer, als ein Gleichspannungspegel eines am Versorgungsanschluss anliegenden Versorgungssignals ist. Somit dient das Versorgungssignal bzw. der Gleichspannungspegel des Versorgungssignals für die Auswerteschaltung des Steuergeräts als Referenzsignal. Ein von dem Gleichspannungspegel nach oben abweichender Impuls kann in einfacher Weise von der Auswerteschaltung des Steuergeräts detektiert werden. Dadurch kann das auf das Versorgungssignal aufmodulierte Statussignal von der Auswerteschaltung erkannt, gefiltert und ausgewertet werden. Dadurch, dass besonders bevorzugterweise vorgesehen ist, dass die Amplitude der Stromimpulse des Statussignals mehr als 25 % größer als der Gleichspannungspegel des Versorgungssignals ist, können die Stromimpulse des Statussignals auch bei Schwankungen des Versorgungssignals sicher erkannt werden. Derartige Schwankungen können beispielsweise bei starker Temperaturänderung oder Ausfall eines Lüfters auftreten.

Ferner ist bevorzugterweise vorgesehen, dass der Lüfter eine Schaltung aufweist, welche dazu ausgebildet ist, eine Drehzahl des Motors in Abhängigkeit vom Steuersignal einzustellen. Hierfür ist die Schaltung mit dem Steuereingang des Lüfters elektrisch verbunden.

Die Schaltung ist ferner bevorzugterweise zur Verarbeitung von pulsweiten modulierten Impulsen (PWM-Impulsen) des Steuersignals oder zur Auswertung eines Gleichspannungssignals des Steuersignals ausgebildet. Somit kann das Steuersignal vom Steuergerät in Form eines PWM-Signals oder in Form eines Gleichspannungssignals übertragen bzw. an den Steuereingang des Lüfters angelegt werden.

Der Lüfter weist bevorzugterweise eine Abschaltvorrichtung zur Abschaltung des Motors basierend auf dem Steuersignal auf. Beispielsweise kann bei einem Fehlerfall ein einzelner Lüfter über das Steuersignal vom Steuergerät abgeschaltet werden. Ein Abschalten der Versorgung, an welcher möglicherweise mehrere Lüfter angeschlossen sind, ist nicht erforderlich. Ein derartiger Fehlerfall kann im Lüfter erkannt und mittels der Statussignalschaltung ein entsprechendes Statussignal generiert und dieses auf das am ersten Versorgungsanschluss anliegende Versorgungssignal auf-moduliert werden. Die Fehlerinformation wird von der Auswerteschaltung im Steuergerät erkannt. Anschließend wird ein entsprechendes Abschaltsignal vom Steuergerät generiert und an den Steuereingang des entsprechenden Lüfters angelegt.

Erfindungsgemäß ist ferner eine Belüftungsvorrichtung mit einem Steuergerät und mindestens einem mit dem Steuergerät elektrisch verbundenen Lüfter vorgesehen. Der Lüfter der erfindungsgemäßen Belüftungsvorrichtung ist dabei wie vorbeschrieben ausgebildet. Vorzugsweise ist die Belüftungsvorrichtung als Sitzbelüftung für einen Fahrzeugsitz ausgebildet.

Bevorzugterweise ist vorgesehen, dass mindestens der erste Versorgungsanschluss des Lüfters mit einem Spannungsversorgungsausgang des Steuergeräts elektrisch verbunden ist, wobei das Steuergerät eine Auswerteschaltung zur Auswertung des vom Lüfter über den ersten Versorgungsanschluss übermittelten Statussignals aufweist. Die Stromversorgung bzw. Spannungsversorgung des Lüfters ist somit über das Steuergerät vorgesehen. Die Auswerteschaltung ist dem Steuergerät zugeordnet und elektrisch mit dem Spannungsversorgungsausgang des Steuergeräts gekoppelt. Die Auswerteschaltung dient zur Erkennung bzw. Filterung und zur Auswertung des Statussignals vom Lüfter.

Die Belüftungsvorrichtung weist bevorzugterweise mehrere wie vorbeschrieben ausgebildete Lüfter auf, welche alle mit einem einzigen Spannungsversorgungsausgang des Steuergeräts elektrisch verbunden sind. Bevorzugterweise sind alle Lüfter der Belüftungsvorrichtung über eine einzige Versorgungsleitung sowohl mit dem Steuergerät sowie auch untereinander über die ersten Versorgungsanschlüsse der einzelnen Lüfter miteinander elektrisch gekoppelt. Damit das Steuergerät bzw. die Auswerteschaltung des Steuergeräts die einzelnen Statussignale, welche die Lüfter über dieselbe Versorgungsleitung an das Steuergerät senden, voneinander unterscheiden kann, ist besonders bevorzugterweise vorgesehen, dass jedem Lüfter unterschiedliche Frequenzbereiche für die Erzeugung und Übermittlung der auf-modulierten Statussignale zugeordnet sind. Hierunter ist zu verstehen, dass jeder einzelne Lüfter Statussignale in einem ihm zugeordneten Frequenzbereich generiert und auf das Versorgungssignal auf-moduliert.

Erfindungsgemäß ist ferner ein Verfahren zum Betreiben eines vorbeschriebenen Lüfters vorgesehen, wobei das Verfahren zumindest die folgenden Schritte aufweist:
- Versorgen des Lüfters durch ein Steuergerät mit einer Versorgungsspannung, wobei zumindest der erste Versorgungsanschluss des Lüfters über eine Versorgungsleitung elektrisch mit einem Spannungsversorgungsausgang des Steuergeräts verbunden bzw. gekoppelt ist; und
- Ansteuern des Lüfters über ein vom Steuergerät generiertes Steuersignal, wobei ein Steuereingang des Lüfters über eine Steuerleitung mit dem Steuergerät verbunden ist; und
- Generieren eines Statussignals des Lüfters mittels der dem Lüfter zugeordneten Statussignalschaltung; und
- Auf-Modulieren des Statussignals auf das am ersten Versorgungsanschluss des Lüfters anliegende Versorgungssignal; und
- Auswerten des Statussignals mittels einer dem Steuergerät zugeordneten Auswerteschaltung.

Unter einem Versorgen des Lüfters mit einer Versorgungsspannung ist eine Strom- und/oder Spannungsversorgung zu verstehen. Unter einer Ansteuerung des Lüfters über ein vom Steuergerät generiertes Steuersignal ist zu verstehen, dass der Lüfter hierüber eingeschaltet, ausgeschaltet und/oder dem Lüfter eine Soll-Drehzahl vorgegeben werden kann. Das Statussignal kann beispielsweise in Form von Stromimpulsen generiert und auf das Versorgungssignal, welches am ersten Versorgungsanschluss des Lüfters anliegt, auf-moduliert werden. Die Auswerteeinheit des Steuergeräts dient zum Erkennen bzw. Herausfiltern des Statussignals auf der Versorgungsleitung sowie auch zur Auswertung Statussignals bzw. der Statusinformation selbst.

Bevorzugterweise ist das Verfahren zum Betreiben mehrerer vorbeschriebener Lüfter ausgebildet, wobei die mehreren Lüfter über denselben Spannungsversorgungsausgang des Steuergeräts mit derselben elektrischen Versorgungsspannung versorgt werden und von jedem Lüfter jeweils ein Statussignal auf dieselbe Versorgungsspannung auf-moduliert wird.

Somit kann mit einem einzigen Steuergerät und einer einzigen Auswerteschaltung im Steuergerät ein ganzes Lüfter-Array, das heißt mehrere miteinander über eine Versorgungsleitung verbundene Lüfter, betrieben werden. Jeder einzelne Lüfter kann über eine separate Steuerleitung mit dem Steuergerät zum Empfang von Steuersignalen verbunden bzw. elektrisch gekoppelt sein. Die einzelnen Statussignale können von jedem Lüfter separat generiert und auf eine einzige bzw. gemeinsame Versorgungsleitung auf-moduliert werden. Die Auswerteschaltung ist derart ausgebildet, dass diese die Statussignale der einzelnen Lüfter unterscheiden und den einzelnen Lüftern zuordnen kann. Beispielsweise können hierzu für jeden einzelnen Lüfter unterschiedliche Frequenzbereiche zur Generierung des Statussignals vorgegeben werden.

### Kurze Beschreibung der Zeichnungen

Die Erfindung wird nun in Bezug auf die begleitenden Zeichnungen anhand besonders bevorzugter Ausführungsformen beispielhaft erläutert.

Es zeigen schematisch:
- Fig. 1:: ein vereinfachtes Blockschaltbild einer Belüftungsvorrichtung mit einem Steuergerät und einem daran angeschlossenem Lüfter,
- Fig. 2:: ein vereinfachtes Blockschaltbild einer Belüftungsvorrichtung mit mehreren an einem Steuergerät angeschlossenen Lüftern, und
- Fig. 3:: ein vereinfachtes Signaldiagramm mit einem auf ein Versorgungssignal auf-modulierten Statussignal.

### Bevorzugte Ausführungsformen der Erfindung

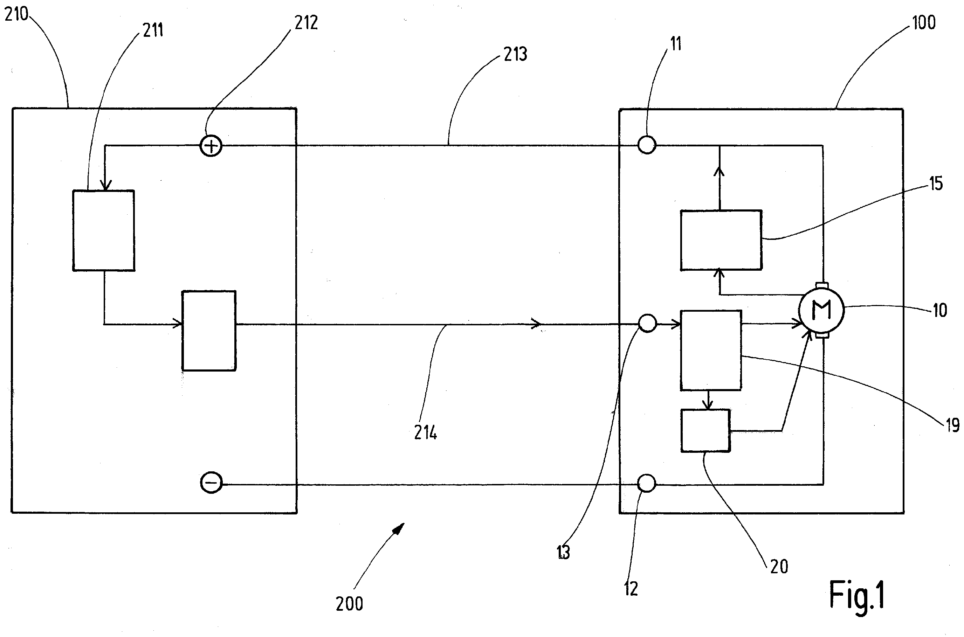

Figur 1 zeigt ein vereinfachtes Blockschaltbild einer Belüftungsvorrichtung 200 mit einem Steuergerät 210 und einem mit dem Steuergerät 210 verbundenen Lüfter 100.

Das Steuergerät 210 liefert die Stromversorgung für den Lüfter 100. Hierfür wird die positive Spannung am Spannungsversorgungsausgang 212 des Steuergeräts 210 ausgegeben und über die Versorgungsleitung 213 an den ersten Versorgungsanschluss 11 des Lüfters 100 angelegt. Ferner ist der Lüfter 100 über eine Steuerleitung 214 mit dem Steuergerät 210 verbunden. Über die Steuerleitung 214 kann das Steuergerät 210 Steuersignale, beispielsweise zum Einschalten, Ausschalten und/oder zur Vorgabe einer Soll-Drehzahl, an den Lüfter 100 übermitteln.

Der Lüfter 100 weist eine Statussignalschaltung 15 zur Generierung eines Statussignals 216 auf. Mittels der Statussignalschaltung 15 wird das Statussignal 216 auf das Versorgungssignal 215, welches über die Versorgungsleitung 213 am ersten Versorgungsanschluss 11 des Lüfters 100 anliegt, auf-moduliert.

Das Steuergerät 210 weist eine Auswerteschaltung 211 zur Erkennung bzw. Filterung und zur Auswertung des Statussignals 216 auf. Hierfür ist die Auswerteschaltung 211 elektrisch mit dem Spannungsversorgungsausgang 212 des Steuergeräts 210 gekoppelt. Die Auswerteschaltung 211 erkennt Stromimpulse 16 des Statussignals 216 bzw. detektiert das Statussignal 216 auf der Versorgungsleitung 213.

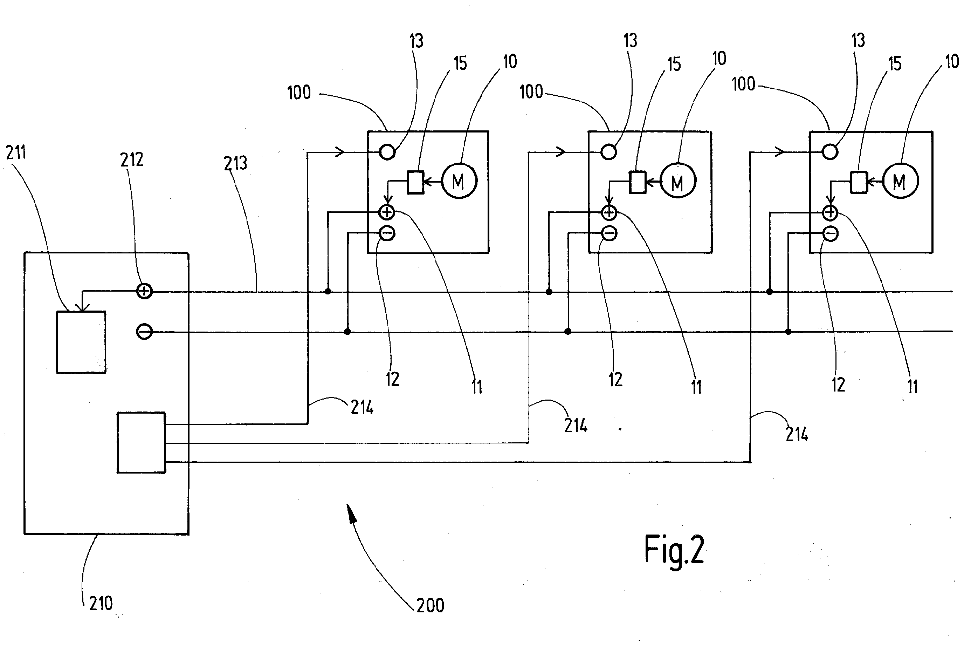

Figur 2 zeigt ein vereinfachteres Blockschaltbild einer Belüftungsvorrichtung 200 mit einem Steuergerät 210, an welchem mehrere Lüfter 100 angeschlossen sind. Die Lüfter 100 werden über separate Steuerleitungen 214 angesteuert. Zur Stromversorgung sind die einzelnen Lüfter 100 über eine gemeinsame Versorgungsleitung 213 mit dem Steuergerät 210 elektrisch verbunden bzw. gekoppelt.

Die einzelnen Lüfter 100 generieren mittels deren jeweiligen Statussignalschaltung 15 ein individuelles Statussignal 216, welches auf die gemeinsame Versorgungsleitung 213 auf-moduliert wird.

Mit der Auswerteschaltung 211 des einzigen Steuergeräts 210 können die unterschiedlichen Statussignale 216 detektiert, den einzelnen Lüftern 100 zugeordnet und ausgewertet werden.

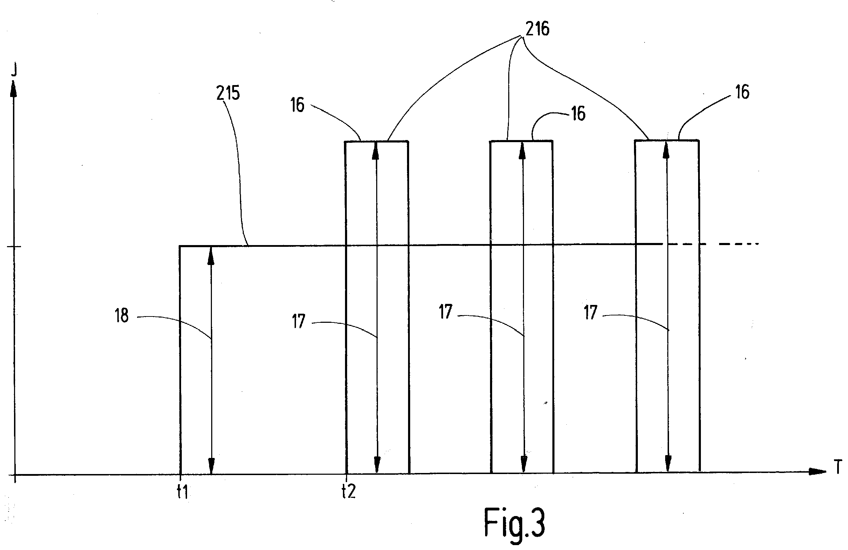

Figur 3 zeigt ein vereinfachtes Signaldiagramm für die Stromversorgung und das Statussignal 216. Zum Zeitpunkt t1 wird die Stromversorgung bzw. das Versorgungssignal 215 über das Steuergerät 210 (in Figur 3 nicht gezeigt) eingeschaltet. Ab Zeitpunkt t2 ist beispielhaft ein von einem Lüfter 100 (in Figur 3 nicht gezeigt) generiertes Statussignal 216 gezeigt, welches in Form von Stromimpulsen 16 auf das Versorgungssignal 215 auf-moduliert ist.

Die Stromimpulse 16 weisen jeweils eine Amplitude 17 auf, welche um mehr als 25 % größer als der Gleichspannungspegel 18 des Versorgungssignals 215 ist. Dadurch können die Stromimpulse 16 des Statussignals 216 auch bei Schwankungen des Versorgungssignals 215 sicher erkannt werden.

### Bezugszeichenliste

- 100: Lüfter
- 200: Belüftungsvorrichtung

- 10: Motor
- 11: Erster Versorgungsanschluss
- 12: Zweiter Versorgungsanschluss
- 13: Steuereingang
- 14: Lüfterrad
- 15: Statussignalschaltung
- 16: Stromimpulse
- 17: Amplitude
- 18: Gleichspannungspegel
- 19: Schaltung zur Verarbeitung des Steuersignals
- 20: Abschaltvorrichtung

- 210: Steuergerät
- 211: Auswerteschaltung
- 212: Spannungsversorgungsausgang
- 213: Versorgungsleitung
- 214: Steuerleitung
- 215: Versorgungssignal
- 216: Statussignal

## Patentansprüche

1. Lüfter (100), aufweisend ein Lüfterrad (14) und einen Motor (10) zum Antrieb des Lüfterrads (14), wobei der Lüfter (100) zwei Versorgungsanschlüsse (11, 12) zur Stromversorgung des Motors (10) und einen Steuereingang (13) zur Ansteuerung des Motors (10) mittels eines Steuersignals aufweist, wobei der Lüfter (100) eine Statussignalschaltung (15) zur Erzeugung eines Statussignals
(216) des Lüfters (100) aufweist,
**dadurch gekennzeichnet,**
**dass** die Statussignalschaltung (15) zur Modulation des Statussignals (216) auf einen der zwei Versorgungsanschlüsse (11 12) ausgebildet ist, wobei der Steuereingang (13) ausschließlich als Signaleingang ausgebildet ist.

2. Lüfter(100)gemäßAnspruch **1**,
**dadurch gekennzeichnet,**
**dass** die Statussignalschaltung (15) zur Generierung von Stromimpulsen (16) für das Statussignal (216) ausgebildet ist.

3. Lüfter (100) gemäß Anspruch 1 oder 2,
**dadurch gekennzeichnet,**
**dass** die Statussignalschaltung (15) zur Generierung von Stromimpulsen (16) für das Statussignal (216) mit unterschiedlicher und vom Statusfall abhängiger Frequenz ausgebildet ist.

4. Lüfter (100) gemäß einem der vorhergehenden Ansprüche,
**dadurch gekennzeichnet,**
**dass** die Statussignalschaltung (15) zur Amplituden-Modulation des Statussignals (216) auf ein Versorgungssignal (215) an einem der zwei Versorgungsanschlüsse (11,12) ausgebildet ist.

5. Lüfter (100) gemäß einem der Ansprüche 2 bis 4,
**dadurch gekennzeichnet,**
**dass** die Statussignalschaltung (15) zur Generierung der Stromimpulse (16) mit einer Amplitude (17) ausgebildet ist, wobei die Amplitude (17) größer als ein Gleichspannungspegel (18) eines am Versorgungsanschluss (11, 12) anliegenden Versorgungssignals (215) ist.

6. Lüfter (100) gemäß einem der vorhergehenden Ansprüche,
**dadurch gekennzeichnet,**
**dass** der Lüfter (100) eine Schaltung (19) aufweist, welche dazu ausgebildet ist, eine Drehzahl des Motors (10) in Abhängigkeit vom Steuersignal einzustellen.

7. Lüfter (100) gemäß Anspruch 6,
**dadurch gekennzeichnet,**
**dass** die Schaltung (19) ferner zur Verarbeitung von PWM-Impulsen des Steuersignals oder zur Verarbeitung eines Gleichspannungssignals des Steuersignals ausgebildet ist.

8. Lüfter (100) gemäß einem der vorhergehenden Ansprüche,
**dadurch gekennzeichnet,**
**dass** der Lüfter (10) eine Abschaltvorrichtung (20) zur Abschaltung des Motors (10) basierend auf dem Steuersignal aufweist.

9. Belüftungsvorrichtung (200), aufweisend ein Steuergerät (210) und mindestens ein mit dem Steuergerät (210) elektrisch verbundener Lüfter (100),
**dadurch gekennzeichnet,**
**dass** der mindestens eine Lüfter (100) gemäß einem der vorhergehenden Ansprüche ausgebildet ist.

10. Belüftungsvorrichtung (200) gemäß Anspruch 9,
**dadurch gekennzeichnet,**
**dass** mindestens der erste Versorgungsanschluss (11) des Lüfters (100) mit einem Spannungsversorgungsausgang (212) des Steuergeräts (210) elektrisch verbunden ist, wobei das Steuergerät (210) eine Auswerteschaltung (211) zur Auswertung des vom Lüfter (100) über den ersten Versorgungsanschluss (11) an das Steuergerät (210) übermittelten Statussignals (216) aufweist.

11. Belüftungsvorrichtung (200) gemäß Anspruch 9 oder 10,
**dadurch gekennzeichnet,**
**dass** die Belüftungsvorrichtung (200) mehrere Lüfter (100) aufweist, welche alle mit einem Spannungsversorgungsausgang (212) des Steuergeräts (210) elektrisch verbunden sind.

12. Verfahren zum Betreiben eines gemäß einem der Ansprüche 1 bis 8 ausgebildeten Lüfters (100), wobei das Verfahren zumindest die folgenden Schritte aufweist:
Versorgen des Lüfters (100) durch ein Steuergerät (210) mit einer Versorgungsspannung, wobei zumindest der erste Versorgungsanschluss (11) des Lüfters (100) über eine Versorgungsleitung (213) elektrisch mit einem Spannungsversorgungsausgang (212) des Steuergeräts (210) verbunden ist; und
Ansteuern des Lüfters (100) über ein vom Steuergerät (210) generiertes Steuersignal, wobei ein Steuereingang (13) des Lüfters (100) über eine Steuerleitung (214) mit dem Steuergerät (210) verbunden ist; und
Generieren eines Statussignals (216) des Lüfters (100) mittels der dem Lüfter (100) zugeordneten Statussignalschaltung (15); und
Auf-Modulieren des Statussignals (216) auf die am ersten Versorgungsanschluss (11) anliegende Versorgungsspannung; und
Auswerten des Statussignals (216) mittels einer dem Steuergerät (210) zugeordneten Auswerteschaltung (211).

13. Verfahren gemäß Anspruch 12,
**dadurch gekennzeichnet,**
**dass** das Verfahren zum Betreiben mehrerer gemäß einem der Ansprüche 1 bis 8 ausgebildeter Lüfter (100) ausgebildet ist, wobei die mehreren Lüfter (100) über denselben Spannungsversorgungsausgang (212) des Steuergeräts (210) mit derselben elektrischen Versorgungsspannung versorgt werden, und von jedem Lüfter (100) jeweils ein Statussignal (216) auf dieselbe Versorgungsspannung auf-moduliert wird.

## Claims

1. A fan (100), comprising a fan wheel (14) and a motor (10) for driving the fan wheel (14), wherein the fan (100) comprises two supply connections (11, 12) for supplying power to the motor (10) and a control input (13) for controlling the motor (10) by means of a control signal, wherein the fan (100) comprises a status signal circuit (15) for generating a status signal (216) of the fan (100),
**characterized in that**
the status signal circuit (15) is configured for modulating the status signal (216) on one of the two supply connections (11, 12), wherein the control input (13) is configured exclusively as a signal input.

2. Fan (100) according to claim 1,
**characterized in that**
the status signal circuit (15) is configured for generating current pulses (16) for the status signal (216).

3. Fan (100) according to claim 1 or 2,
**characterized in that**
the status signal circuit (15) is configured for generating current pulses (16) for the status signal (216) with different frequency depending on the status.

4. Fan (100) according to one of the preceding claims,
**characterized in that**
the status signal circuit (15) is configured for amplitude modulation of the status signal (216) to a supply signal (215) at one of the two supply connections (11, 12).

5. Fan (100) according to one of claims 2 to 4,
**characterized in that**
the status signal circuit (15) is configured for generating the current pulses (16) with an amplitude (17), wherein the amplitude (17) is greater than a DC voltage level (18) of a supply signal (215) applied to the supply connection (11, 12).

6. Fan (100) according to one of the preceding claims,
**characterized in that**
the fan (100) comprises a circuit (19) which is configured to set a rotation speed of the motor (10) depending on the control signal.

7. Fan (100) according to claim 6,
**characterized in that**
the circuit (19) is further configured to process PWM pulses of the control signal or to process a DC signal of the control signal.

8. Fan (100) according to one of the preceding claims,
**characterized in that**
the ventilator (10) comprises a switch-off device (20) for switching off the motor (10) based on the control signal.

9. Fan device (200), comprising a control device (210) and at least one fan (100) electrically connected to the control device (210),
**characterized in that**
the at least one fan (100) is configured according to one of the preceding claims.

10. Fan device (200) according to claim 9,
**characterized in that**
at least the first supply connection (11) of the fan (100) is electrically connected to a power supply output (212) of the control device (210), wherein the control device (210) comprises an evaluation circuit (211) for evaluating the status signal (216) transmitted from the fan(100) to the control device (210) via the first supply connection (11).

11. Fan device (200) according to claim 9 or 10,
**characterized in that**
the ventilation device (200) comprises a plurality of fans (100), which are all electrically connected to a power supply output (212) of the control device (210).

12. Method for operating a fan (100) configured according to one of claims 1 to 8, wherein the method comprises at least the following steps:
∘ supplying the fan (100) with a supply voltage by a control device (210), wherein at least the first supply connection (11) of the ventilator (100) is electrically connected to a power supply output (212) of the control device (210) via a supply line (213); and
∘ controlling the fan (100) via a control signal generated by the control device (210), wherein a control input (13) of the fan (100) is connected to the control device (210) via a control line (214); and
∘ generating a status signal (216) of the fan (100) by means of the status signal circuit (15) assigned to the fan (100); and
∘ modulating the status signal (216) to the supply voltage applied to the first supply connection (11); and
∘ evaluating the status signal (216) by means of an evaluation circuit (211) assigned to the control device (210).

13. A method according to claim 12,
**characterized in that**
the method is configured for operating a plurality of fans (100) configured according to one of claims 1 to 8 wherein the plurality of fans (100) are supplied with the same electrical supply voltage via the same power supply output (212) of the control device (210), and from each fan (100) a status signal (216) each is modulated on the same supply voltage.

## Revendications

1. Ventilateur (100) comprenant une roue de ventilateur (14) et un moteur (10) pour entraîner la roue de ventilateur (14), le ventilateur (100) comportant deux connexions d'alimentation (11,12) pour l'alimentation en courant du moteur (10) et une entrée de commande (13) pour la commande du moteur (10) au moyen d'un signal de commande, le ventilateur (100) comportant un circuit de signaux d'état (15) pour générer un signal d'état (216) du ventilateur (100),
**caractérisé en ce que**
le circuit de signaux d'état (15) est constitué pour la modulation du signal d'état (216) sur une des deux connexions d'alimentation (11,12), l'entrée de commande (13) étant exclusivement constituée comme entrée de signaux.

2. Ventilateur (100) selon la revendication 1, **caractérisé en ce que** le circuit de signaux d'état (15) est constitué pour générer des impulsions de courant (16) pour le signal d'état (216).

3. Ventilateur (100) selon la revendication 1 ou 2, **caractérisé en ce que** le circuit de signaux d'état (15) est constitué pour générer des impulsions de courant (16) pour le signal d'état (216) avec une fréquence différente et dépendante du cas d'état.

4. Ventilateur (100) selon l'une quelconque des revendications précédentes, **caractérisé en ce que** le circuit de signaux d'état (15) est constitué pour la modulation d'amplitude du signal d'état (216) sur un signal d'alimentation (215) à une des deux connexions d'alimentation (11,12).

5. Ventilateur (100) selon l'une quelconque des revendications 2 à 4, **caractérisé en ce que** le circuit de signaux d'état (15) est constitué pour générer des impulsions de courant (16) avec une amplitude (17), l'amplitude (17) étant plus grande qu'un niveau de tension continue (18) d'un signal d'alimentation (215) attenant à la connexion d'alimentation (11,12).

6. Ventilateur (100) selon l'une quelconque des revendications précédentes, **caractérisé en ce que** le ventilateur (100) comporte un circuit (19), lequel est constitué pour régler un nombre de tours du moteur (10) en fonction du signal de commande.

7. Ventilateur (100) selon la revendication 6, **caractérisé en ce que** le circuit (19) est en plus constitué pour traiter des impulsions à MLI (Modulation de largeur d'impulsion) du signal de commande ou pour traiter un signal de tension continu du signal de commande.

8. Ventilateur (100) selon l'une quelconque des revendications précédentes, **caractérisé en ce que** le ventilateur (100) comporte un dispositif de coupure (20) pour couper le moteur (10) en se basant sur le signal de commande.

9. Dispositif de ventilation (200) comportant un appareil de commande (210) et au moins un ventilateur (100) relié électriquement à l'appareil de commande (210), **caractérisé en ce que** l'au moins un ventilateur (100) est constitué selon l'une quelconque des revendications précédentes.

10. Dispositif de ventilation (200) selon la revendication 9, **caractérisé en ce qu'au** moins la première connexion d'alimentation (11) du ventilateur (100) est reliée électriquement à une sortie d'alimentation en tension (212) de l'appareil de commande (210), l'appareil de commande (210) comportant un circuit d'exploitation (211) pour exploiter le signal d'état (216) transmis par le ventilateur (100) par le biais de la première connexion d'alimentation (11) à l'appareil de commande (210).

11. Dispositif de ventilation (200) selon la revendication 9 ou 10, **caractérisé en ce que** le dispositif de ventilation (200) comporte plusieurs ventilateurs (100), lesquels sont tous reliés électriquement à une sortie d'alimentation en tension (212) de l'appareil de commande (210).

12. Procédé pour faire fonctionner un ventilateur (100) constitué selon l'une quelconque des revendications 1 à 8, le procédé comportant au moins les étapes suivantes :
∘ alimentation du ventilateur (100) par un appareil de commande (210) en une tension d'alimentation, au moins la première connexion d'alimentation (11) du ventilateur (100) étant électriquement reliée par un câble d'alimentation (213) à une sortie d'alimentation en tension (212) de l'appareil de commande (210), et
∘ commande du ventilateur (100) par un signal généré par un appareil de commande (210), une entrée de commande (13) du ventilateur (100) étant reliée par un câble de commande (214) à l'appareil de commande (210), et
∘ génération d'un signal d'état (216) du ventilateur (100) au moyen du circuit de signaux d'état (15) attribué au ventilateur (100), et
∘ modulation du signal d'état (216) sur la tension d'alimentation attenant à la première connexion d'alimentation (11), et
∘ exploitation du signal d'état (216) au moyen d'un circuit d'exploitation (211) attribué à l'appareil de commande (210).

13. Procédé selon la revendication 12, **caractérisé en ce que** le procédé est constitué pour faire fonctionner plusieurs ventilateurs (100) constitués selon l'une quelconque des revendications 1 à 8, les plusieurs ventilateurs (100) étant alimentés par la même sortie d'alimentation en tension (212) de l'appareil de commande (210) avec la même tension d'alimentation électrique et un signal d'état (216) respectif de chaque ventilateur (100) étant modulé à la même tension d'alimentation.
